# EUROPÄISCHE PATENTSCHRIFT

(11) **EP 3 365 276 B1**
(45) Veröffentlichungstag und Bekanntmachung des Hinweises auf die Patenterteilung: **30.01.2019**
(21) Anmeldenummer: 16726292.2
(22) Anmeldetag: 17.05.2016
(51) Int. Cl.: C01B 21/26, B01D 53/56, C01B 21/40

(54) **VERMINDERUNG DER NOX-ABGASKONZENTRATION BEI DER HERSTELLUNG VON SALPETERSAÜRE BEIM AB-UND/ODER ANFAHREN DER HERSTELLUNGSVORRICHTUNG**
REDUCTION OF THE NOX WASTE GAS CONCENTRATION IN THE PRODUCTION OF NITRIC ACID DURING A SHUTDOWN AND/OR START-UP PROCESS OF THE PRODUCTION DEVICE
RÉDUCTION DE LA CONCENTRATION EN NOX DES EFFLUENTS GAZEUX ISSUS DE LA PRODUCTION D'ACIDE NITRIQUE LORS DE L'ARRÊT ET/OU DE LA MISE EN MARCHE DU DISPOSITIF DE PRODUCTION

(30) Priorität: 20.05.2015 DE 102015209243
(43) Veröffentlichungstag der Anmeldung: 29.08.2018
(73) Patentinhaber: thyssenkrupp Industrial Solutions AG, 45143 Essen (DE); thyssenkrupp AG, 45143 Essen (DE)
(72) Erfinder: DAMMEIER, Johannes, 44143 Dortmund (DE)
(74) Vertreter: thyssenkrupp Intellectual Property GmbH
(86) Internationale Anmeldenummer: PCT/EP2016/061029
(87) Internationale Veröffentlichungsnummer: WO 2016/184858

(56) Entgegenhaltungen:
- WO-A1-2011/054928
- DE-A1-102012 000 570
- DE-A1-102012 010 017

## Beschreibung

Die Erfindung betrifft eine Vorrichtung und ein Verfahren zur Verminderung der Konzentration von NOₓ-Stickoxiden in Restgas, welches während des Ab- und/oder Anfahrens von Vorrichtungen zur Herstellung von Salpetersäure anfällt.

Zur Herstellung von Salpetersäure wird üblicherweise NH₃ mit Luftsauerstoff katalytisch oxidiert. Hierbei entsteht NO, das mit O₂ zu NO₂ oxidiert und anschließend mit H₂O in einer Absorptionsvorrichtung unter Bildung von HNO₃ absorbiert. NO und NO₂ werden als nitrose Gase oder auch als NOₓ-Stickoxide bezeichnet. Moderne Anlagen zur Herstellung von Salpetersäure werden unter Druck betrieben, um höhere Säurekonzentrationen und bessere Wirkungsgrade in der Absorption und höhere Abbauraten an NOₓ-Stickoxiden im Restgas zu erreichen.

Es werden Zweidruck- und Monodruckanlagen unterschieden. Bei Zweidruckanlagen erfolgt die Produktion der NOₓ-Stickoxide durch die Oxidation von Ammoniak bei einem Druck von etwa 4•10⁵ bis 6•10⁵ Pa (4 bis 6 bar) und die Absorption der so erzeugten NOₓ-Stickoxide mit Wasser zu Salpetersäure bei 1•10⁶ bis 1,5•10⁶ Pa (10 bis 15 bar). Bei Monodruckanlagen dagegen erfolgen die Gaserzeugung und die Absorption bei annähernd gleichem Druck von etwa 6•10⁵ bis 1,4•10⁶ Pa (6 bis 14 bar). Zur Druckerzeugung dienen Verdichter, die mittels Gas- und/oder Dampfturbine bzw. Elektromotor angetrieben werden.

Moderne Anlagen zur Herstellung von Salpetersäure sind mit Restgasreinigungsanlagen ausgerüstet, um die Konzentration der NOₓ-Stickoxide im Restgas zu verringern. Anschließend wird das Restgas mit einer verringerten Konzentration an NOₓ-Stickoxiden als Abgas an die Umgebung abgegeben. Dabei werden die NOₓ-Stickoxide, also NO und NO₂, üblicherweise in den Restgasreinigungsanlagen durch SCR (*Selective Catalytic Reduction*)-Verfahren unter Zufuhr geeigneter Reduktionsmittel, wie z.B. Ammoniak, an geeigneten SCR-Katalysatoren, wie z.B. V₂O₅/TiO₂-basierten DeNOx-Katalysatoren, reduziert. Der relative Anteil von NO₂ bezogen auf die molare Gesamtmenge an NOₓ im Restgas wird durch den Oxidationsgrad des NOₓ charakterisiert. Eine Weiterentwicklung der SCR-Technologie im Bereich der Salpetersäuretechnologie ist das EnviNOx®-Verfahren, bei dem NOₓ-Stickoxide durch Zufuhr geeigneter Reduktionsmittel besonders wirksam reduziert werden und NOₓ im Abgas in vielen Fällen praktisch nicht mehr nachweisbar ist. Zusätzlich wird dabei N₂O ebenfalls reduziert oder katalytisch zersetzt.

Die Konzentrationen der NOₓ-Stickoxid-Emissionen dürfen gemäß behördlicher Auflagen einen maximalen Grenzwert nicht überschreiten. Derzeit ist ein Wert von 50 ppm ein üblicher Grenzwert, es ist aber zu erwarten, dass dieser zukünftig verringert wird.

Im Unterschied zum stationären Betrieb der Anlagen zur Herstellung von Salpetersäure ist es während des Ab- und/oder Anfahrens bzw. beim Ausfall der Anlage derzeit jedoch nicht oder nur eingeschränkt möglich, zeitlich begrenzte Emissionen von NOₓ-Stickoxiden zu vermeiden, welche die Grenzwerte deutlich überschreiten.

Beim Ausfall bzw. während des Abfahrens der Anlage zur Herstellung von Salpetersäure werden die in der Anlage unter Druck befindlichen NOₓ-Stickoxide üblicherweise über die Absorptionsvorrichtung und die Restgasreinigungsanlage in die Umgebung entspannt. Die Restgasreinigungsanlage kann jedoch nur bis zu einer bestimmten zulässigen Grenztemperatur in Betrieb gehalten werden, unterhalb derer sie außer Betrieb genommen werden muss. Restgasreinigungssysteme, bei denen NH₃ als Reduktionsmittel für die NOₓ-Stickoxide eingesetzt wird, können nämlich erst ab einer minimalen Grenztemperatur dauerhaft in Betrieb genommen werden, um die unerwünschte Bildung und Akkumulation von NH₄NO₃ auf dem SCR-Katalysator zu vermeiden. Diese Grenztemperatur liegt häufig im Bereich von 170 bis 200°C. Im stationären Betrieb erreichen Anlagen zur Herstellung von Salpetersäure typischerweise Betriebstemperaturen von ca. 300°C bis ca. 600°C, wobei die Restgasreinigungsanlage ohne unerwünschte Bildung und Akkumulation von NH₄NO₃ betrieben werden kann.

In der Regel muss das Ausschalten der Restgasreinigungsanlage vor der vollständigen Entspannung der Anlage erfolgen, weshalb die Konzentration der NOₓ-Stickoxide im an die Umgebung abzugebenden Restgas stark zunimmt. Ein weiterer Anstieg der NOₓ-Stickoxid-Emissionen entsteht dadurch, dass die üblicherweise mit Siebboden ausgestattete Absorptionsvorrichtung mit zunehmender Entspannung der Anlage instabil wird, so dass der Absorptionswirkungsgrad stark abfällt. Sobald die Restgasreinigungsanlage außer Betrieb ist, wird während der Restentspannung die Konzentration an NOₓ-Stickoxiden-Emissionen stark zunehmen.

Beim Ausfall bzw. Abfahren einer Anlage zur Herstellung von Salpetersäure wird üblicherweise zuerst die Ammoniakzuführung zur Gaserzeugung abgesperrt, bevor der Maschinensatz der Anlage abgestellt wird. Solange die Restgasreinigungsanlage unter Beachtung der Grenztemperaturen in Betrieb gehalten werden kann, wird das an die Umgebung abzugebende Restgas die Konzentration an NOₓ-Stickoxiden nicht überschreiten und das Restgas wird farblos sein. Vorteilhaft ist es dabei, den Maschinensatz solange wie möglich in Betrieb zu halten, bis die NOₓ-Stickoxide in der Anlage zur Herstellung von Salpetersäure durch Luft ersetzt sind. Wenn jedoch eine Abschaltung des Maschinensatzes unmittelbar oder kurz nach dem Abstellen der Ammoniakzuführung erforderlich ist, ist ein solcher Gasaustausch nicht mehr gegeben. Bei weiterer Entspannung und dadurch bedingtem zwangsläufigem Erreichen der Grenztemperatur für die Restgasreinigungsanlage und den dadurch bedingten Ausfall der Restgasreinigungsanlage treten deutlich höhere Emissionen von NOₓ-Stickoxiden auf.

Aufgrund des thermodynamischen Gleichgewichts liegen die NOₓ-Stickoxide mit Abkühlung der Betriebstemperatur überwiegend in Form von NO₂ vor, weshalb diese im Restgas, das an die Umgebung abgegeben wird, als braunes Gas sichtbar werden.

Auch beim Anfahren der Anlage wird der Grenzwert der Konzentration an NOₓ-Stickoxiden im an die Umgebung abgegebenen Restgas überschritten. Ein Teil dieses Restgases sind Gase, welche beim Stillstand der Anlage in den Rohrleitungen und Apparaten verblieben sind oder sich darin gebildet haben. Die Absorption von NOₓ-Stickoxiden in einer wässrigen Zusammensetzung ist ein reversibler Prozess ist, der mit der Desorption von NOₓ-Stickoxiden aus der wässrigen Zusammensetzung im Gleichgewicht steht. Daher resultiert ein weiterer Teil der NOₓ-Stickoxiden aus NOₓ-Ausgasungen aus Salpetersäure, mit der üblicherweise beim Wiederanfahren der Anlage die Absorptionsvorrichtung befüllt wird.

Um die Konzentration an NOₓ-Stickoxiden im Restgas einer Anlage zur Herstellung von Salpetersäure zu reduzieren, wird die Restgasreinigungsanlage beim Anfahren der Anlage so früh wie möglich in Betrieb genommen. Das Restgas wird üblicherweise nach Durchströmen der Restgasreinigungsanlage über einen Expander an die Umgebung abgegeben, wobei sich das Restgas abkühlt. Solange das Restgas eine ausreichend hohe Betriebstemperatur noch nicht erreicht hat, kann die Restgasreinigung noch nicht in Betrieb genommen werden, da die Gefahr der Bildung und Ablagerung von brennbarem und explosivem Ammoniumnitrat und Ammoniumnitrit aus NH₃ und NOₓ-Stickoxiden besteht. Auch aus diesem Grund ist eine Reduzierung der NOₓ-Stickoxide im Restgas einer Anlage zur Herstellung von Salpetersäure wünschenswert.

DE 10 2012 000 569 A1 offenbart ein Verfahren zum farblosen An- und Abfahren von Salpetersäureanlagen. Dabei wird beim Anfahren und/oder beim Abfahren der Salpetersäureanlage unter Druck stehendes erhitztes Fluid in die Salpetersäureanlage eingespeist, um die Geschwindigkeit des Temperaturabfalls des durch die Salpetersäureanlage strömenden Gases beim Abfahren der Anlage zu verringern oder um die Geschwindigkeit des Temperaturanstiegs des durch die Salpetersäureanlage strömenden Gases beim Anfahren der Anlage zu vergrößern.

DE 10 2012 010 017 A1 offenbart ein Verfahren zur Verminderung der Stickoxid-Abgaskonzentration in einer Salpetersäureanlage beim Ab- und/oder Anfahren sowie dafür geeignete Salpetersäureanlagen. Das Verfahren ist dadurch gekennzeichnet, dass beim Anfahren und/oder beim Abfahren der Salpetersäureanlage unter Druck stehendes, Stickoxide enthaltendes Abgas aus der Salpetersäureanlage sowie gasförmiges Reduktionsmittel für die Stickoxide in einen mit Katalysator befüllten Reaktor geleitet werden, der zusätzlich zum Reaktor der Restgasreinigung vorgesehen ist.

Die Verfahren und die Vorrichtungen einer unter Druck betriebenen Anlage zur Herstellung von Salpetersäure beim Ab- und/oder Anfahren der Anlage sind jedoch nicht in jeder Hinsicht zufriedenstellend und es besteht ein Bedarf an verbesserten Verfahren und Vorrichtungen. WO 2011/054928 A1 offenbart ein Verfahren zur Herstellung von Salpetersäure im Rahmen dessen dem Teillastbetrieb ein Teil der verdichteten Prozessluft unter Umgehung des chemischen Prozesses zur Energierückgewinnung einem Gasexpander (7) zugeführt wird.

DE 10 2012 000 570 A1 offenbart ein Verfahren zum Anfahren und/oder Abfahren einer Anlage zur Herstellung von Salpetersäure aus Ammoniak und sauerstoffhaltigem Gas nach dem Eindruck- oder Zweidruckverfahren, bei dem die Oxidation des eingesetzten Ammoniaks mittels verdichteter Prozessluft an einem Katalysator geschieht, die in mindestens einem Verdichter (6) verdichtet wurde, das durch die Verbrennung gebildete Nitrosegas in ein oder mehreren mit Rohrschlangen für ein Kühlmedium ausgestatteten Prozessgaskühlern (3) sowie in ein oder mehreren mit Rohrschlangen für ein Kühlmedium ausgestatteten Speisewasservorwärmern (2) gekühlt wird und daran anschließend das gekühlte Nitrosegas mindestens teilweise von Wasser absorbiert wird, wodurch Salpetersäure entsteht, und das nicht absorbierte Restgas zwecks Gewinnung von Verdichterarbeit in einer Restgasturbine (11) expandiert wird.

Es ist eine Aufgabe der Erfindung, die Konzentration an NOₓ-Stickoxiden in dem an die Umgebung abgegebenen Restgas zu verringern, welches während des Ab- und/oder Anfahrens von Vorrichtungen zur Herstellung von Salpetersäure anfällt.

Diese Aufgabe wird durch den Gegenstand der Patentansprüche gelöst.

Ein erster Aspekt der Erfindung betrifft eine Vorrichtung zur Herstellung von Salpetersäure aus NOₓ-Stickoxiden umfassend die miteinander in Wirkverbindung stehenden Komponenten:
(i) einen Reaktor konfiguriert zur Erzeugung von NOₓ-Stickoxiden;
(ii) eine Absorptionsvorrichtung konfiguriert zur Absorption mindestens eines Teils der erzeugten NOₓ-Stickoxide in einer wässrigen Zusammensetzung;
(iii) eine Restgasreinigungsanlage konfiguriert zum Zersetzen und/oder Reduzieren von nicht absorbierten NOₓ-Stickoxiden;
(iv) Zuführungsmittel konfiguriert zum Zuführen der erzeugten NOₓ-Stickoxide von dem Reaktor zu der Absorptionsvorrichtung;
(v) Abführungsmittel konfiguriert zum Abführen nicht absorbierter NOₓ-Stickoxide von der Absorptionsvorrichtung zu der Restgasreinigungsanlage; und
(vi) einen Bypass konfiguriert zum Überführen eines Gasgemischs während des An- und/oder Abfahrens der Vorrichtung zur Herstellung von Salpetersäure von dem Reaktor zu der Restgasreinigungsanlage unter Umgehung der Absorptionsvorrichtung.

Die erfindungsgemäße Vorrichtung umfasst einen Reaktor, welcher zur Erzeugung von NOₓ-Stickoxiden konfiguriert ist. Bevorzugt ist der Reaktor zur Umsetzung von NH₃ unter Erzeugung von NOₓ-Stickoxiden konfiguriert. Geeignete Reaktoren sind einem Fachmann bekannt.

Die erfindungsgemäße Vorrichtung umfasst eine Absorptionsvorrichtung, welche zur Absorption mindestens eines Teils der erzeugten NOₓ-Stickoxide in einer wässrigen Zusammensetzung konfiguriert ist. Geeignete Absorptionsvorrichtungen, beispielsweise Absorptionstürme, sind einem Fachmann bekannt. Zur Herstellung von Salpetersäure wird die Absorptionsvorrichtung bevorzugt von den im Reaktor erzeugten NOₓ-Stickoxiden durchströmt. Bevorzugt ist die Absorptionsvorrichtung konfiguriert, mindestens 10 Vol.-% der im Reaktor erzeugten NOₓ-Stickoxide zu absorbieren, bevorzugt mindestens 20 Vol.-%, mindestens 30 Vol.-%, mindestens 40 Vol.-%, mindestens 50 Vol.-%, mindestens 60 Vol-%, mindestens 70 Vol.-%, mindestens 80 Vol.-%, mindestens 90 Vol.-% oder mindestens 99 Vol.-%. Bevorzugt umfasst die Absorptionsvorrichtung Siebböden oder Glockenböden. Bevorzugt sind die Siebböden oder die Glockenböden konfiguriert, die wässrige Zusammensetzung aufzunehmen, welche die NOₓ-Stickoxide absorbiert. Bevorzugt sind die Siebböden dazu konfiguriert, beim Anfahren der Vorrichtung zur Herstellung von Salpetersäure die wässrige Zusammensetzung aufzunehmen, sobald die Restgasreinigungsanlage in Betrieb genommen wurde. Die wässrige Zusammensetzung umfasst bevorzugt Salpetersäure. Die Glockenböden sind bevorzugt konfiguriert, dass sie beim Anfahren der Vorrichtung zur Herstellung von Salpetersäure bereits mit der wässrigen Zusammensetzung befüllt sind.

Die Absorptionsvorrichtung ist bevorzugt derart konfiguriert, dass die NOₓ-Stickoxide am Fußende in die Absorptionsvorrichtung einströmen, die Absorptionsvorrichtung von unten nach oben durchströmen und die Absorptionsvorrichtung am oberen Ende verlassen. Bevorzugt ist die Absorptionsvorrichtung zur Kühlung der NOₓ-Stickoxide konfiguriert. Bevorzugt erfolgt die Kühlung der NOₓ-Stickoxide in der Absorptionsvorrichtung derart, dass die NOₓ-Stickoxide beim Durchströmen der Absorptionsvorrichtung um mindestens 10°C gekühlt werden, bevorzugt um mindestens 20°C, mindestens 30°C, mindestens 40°C, mindestens 50°C, mindestens 60°C, mindestens 70°C, mindestens 80°C, mindestens 90°C oder mindestens 100°C.

Bevorzugt ist die Absorptionsvorrichtung so konfiguriert, dass ihr Volumen bezogen auf das Gesamtvolumen aller Teile der Vorrichtung zur Herstellung von Salpetersäure mindestens 10 Vol.-% beträgt, bevorzugter mindestens 20 Vol.-%, mindestens 30 Vol.-%, mindestens 40 Vol.-%, mindestens 50 Vol.-%, mindestens 60 Vol.-%, mindestens 70 Vol.-% mindestens 80 Vol.-%, mindestens 90 Vol.-% oder mindestens 99 Vol.-%.

Die Restgasreinigungsanlage ist konfiguriert zum Zersetzen und/oder Reduzieren von nicht absorbierten NOₓ-Stickoxiden. Restgasreinigungsanlagen sind einem Fachmann bekannt und ermöglichen eine Reduktion der NOₓ-Stickoxide NO und NO₂ üblicherweise durch SCR-Verfahren unter Zufuhr geeigneter Reduktionsmittel. Darüber hinaus ermöglichen sie bevorzugt eine katalytische Reduktion oder Zersetzung von N₂O. Die Restgasreinigungsanlage ist bevorzugt mit Katalysatoren zum Abbau von NOₓ-Stickoxiden beschickt (DeNOₓ-Katalysatoren). Diese Katalysatoren sind dem Fachmann bekannt.

In der Regel handelt es sich dabei um Übergangsmetall-Katalysatoren, welche die Reduktion von NOₓ-Stickoxiden mit Reduktionsmitteln fördern. Bevorzugt sind klassische DeNOₓ-Katalysatoren, insbesondere solche, die Übergangsmetalle und/oder Übergangsmetalloxide enthalten, wie z.B. Eisen-, Nickel-, Kupfer-, Cobalt-, Mangan-, Rhodium-, Rhenium- oder Vanadiumoxide oder metallisches Platin, Gold oder Palladium sowie Mischungen von zwei oder mehreren dieser Verbindungen. Besonders bevorzugt werden Katalysatoren auf V₂O₅-TiO₂-Basis.

Neben den DeNOₓ-Katalysatoren, welche die Reduktion der NOₓ-Stickoxide mit Reduktionsmitteln katalysieren, kann die Restgasreinigungsanlage auch noch Katalysatoren enthalten, welche die chemische Zersetzung von N₂O in Stickstoff und Sauerstoff oder die chemische Reduktion von N₂O mit Reduktionsmitteln fördern. Diese Katalysatoren sind einem Fachmann bekannt.

In die Restgasreinigungsanlage werden neben dem Restgas, das NOₓ-Stickoxide enthält, auch Reduktionsmittel für Stickoxide, insbesondere Reduktionsmittel für NOₓ-Stickoxide, eingebracht. Als Reduktionsmittel für NOₓ-Stickoxide eignen sich beispielsweise Stickstoff enthaltende Reduktionsmittel. Besonders bevorzugt wird Ammoniak als Reduktionsmittel für Stickoxide, insbesondere für NOₓ-Stickoxide, eingesetzt. Die benötigten Mengen an Reduktionsmittel sind von der Art des Reduktionsmittels abhängig und können vom Fachmann durch Routineexperimente ermittelt werden.

Bevorzugt ist die Restgasreinigungsanlage konfiguriert, die Konzentration an NOₓ-Stickoxiden im Restgas der Vorrichtung zur Herstellung von Salpetersäure um mindestens 10% zu verringern, bevorzugter um mindestens 20%, mindestens 30%, mindestens 40%, mindestens 50%, mindestens 60%, mindestens 70%, mindestens 80%, mindestens 90% oder mindestens 99%.

Die Vorrichtung zur Herstellung von Salpetersäure aus NOₓ-Stickoxiden umfasst weiterhin Zuführungsmittel, welche zum Zuführen der erzeugten NOₓ-Stickoxide von dem Reaktor zur der Absorptionsvorrichtung konfiguriert sind, und Abführungsmittel, welche zum Abführen nicht absorbierter oder desorbierter NOₓ-Stickoxide von der Absorptionsvorrichtung zu der Restgasreinigungsanlage konfiguriert sind. Dabei umfassen die Zuführungsmittel und Abführungsmittel bevorzugt geeignete Rohrleitungen, wodurch der Reaktor, die Absorptionsvorrichtung und die Restgasreinigungsanlage miteinander in einer Weise verbunden werden, welche die allgemeine Funktionsfähigkeit der Vorrichtung gewährleistet. Die dafür erforderlichen Maßnahmen sind einem Fachmann bekannt.

Bevorzugt sind die Zuführungsmittel derart konfiguriert, dass die von dem Reaktor erzeugten NOₓ-Stickoxide dem unteren Ende der Absorptionsvorrichtung zugeleitet werden. Bevorzugt sind die Abführungsmittel derart konfiguriert, dass die nicht absorbierten oder desorbierten NOₓ-Stickoxide vom oberen Ende der Absorptionsvorrichtung zu der Restgasreinigungsanlage abgeführt werden.

Die Vorrichtung zur Herstellung von Salpetersäure umfasst einen Bypass, welcher zum Überführen eines Gasgemischs von dem Reaktor zu der Restgasreinigungsanlage unter Umgehung der Absorptionsvorrichtung während des An- und/oder Abfahrens der Vorrichtung zur Herstellung von Salpetersäure konfiguriert ist.

Ein Fachmann kann den Zustand einer Vorrichtung zur Herstellung von Salpetersäure während ihres An- und/oder Abfahrens vom Zustand der Vorrichtung während ihres stationären Betriebs unterscheiden. Das Anfahren der Vorrichtung geht dem stationären Betrieb voraus, das Abfahren der Vorrichtung schließt sich dem stationären Betrieb an.

Bevorzugt umfasst das Gasgemisch, welches während des An- und/oder Abfahrens der Vorrichtung zur Herstellung von Salpetersäure von dem Reaktor zu der Restgasreinigungsanlage unter Umgehung der Absorptionsvorrichtung überführt wird, Luft. Das Gasgemisch kann ggf. weitere Bestandteile umfassen. Bevorzugt umfasst das Gasgemisch Luft und NOₓ-Stickoxide. Bevorzugt wird der Bypass von dem Gasgemisch vor dem Zünden bzw. nach dem Abschalten der Ammoniakverbrennung beim An- und/oder Abfahren der Vorrichtung zur Herstellung von Salpetersäure von dem Gasgemisch durchströmt. Bevorzugt ist der Bypass zwischen den Zuführungsmitteln und den Abführungsmitteln angeordnet. Bevorzugt umfasst der Bypass eine Rohrleitung, welche mit dem Zuführungsmittel und dem Abführungsmittel der erfindungsgemäßen Vorrichtung in Wirkverbindung steht.

Bevorzugt wird das Gasgemisch, welches von dem Reaktor zu der Restgasreinigungsanlage unter Umgehung der Absorptionsvorrichtung überführt wird, erwärmt. Bevorzugt wird das Gasgemisch beim Ab- und/oder Anfahren der Vorrichtung zur Herstellung von Salpetersäure erwärmt. Bevorzugt wird das Gasgemisch vor dem Zünden bzw. nach dem Abschalten der Ammoniakverbrennung beim An- und/oder Abfahren der Vorrichtung zur Herstellung von Salpetersäure erwärmt. Bevorzugt wird das Gasgemisch auf eine solche Temperatur erwärmt, dass die Restgasreinigungsanlage beim Abfahren der Vorrichtung zur Herstellung von Salpetersäure möglichst lange bzw. beim Anfahren der Vorrichtung zur Herstellung von Salpetersäure möglichst früh in Betrieb genommen werden kann.

Bevorzugt wird das Gasgemisch beim Ab- und/oder Anfahren der Vorrichtung zur Herstellung von Salpetersäure auf eine Temperatur von mindestens 100°C erwärmt, bevorzugter mindestens 150°C, mindestens 200°C, mindestens 250°C, mindestens 300°C, mindestens 350°C, mindestens 400°C, mindestens 450°C, mindestens 500°C, mindestens 550°C oder mindestens 600°C.

Das Gasgemisch kann über alle einem Erfinder bekannten Vorrichtungen und Verfahren erwärmt werden. Beispielsweise kann das Gasgemisch mit Hilfe eines Brenners, mit Hilfe von Dampf, durch Kompressionswärme oder mit Hilfe einer elektrischen Vorrichtung erwärmt werden.

Bevorzugt wird das Gasgemisch, welches während des An- und/oder Abfahrens der Vorrichtung zur Herstellung von Salpetersäure von dem Reaktor zu der Restgasreinigungsanlage unter Umgehung der Absorptionsvorrichtung überführt wird, in einer Komprimiervorrichtung verdichtet. Die Komprimiervorrichtung ist bevorzugt konfiguriert zum Verdichten eines Gasgemischs. Erfindungsgemäß können alle zum Verdichten eines Gasgemischs geeigneten Vorrichtungen verwendet werden. Bevorzugt wird zum Verdichten eines Gasgemischs ein Luftverdichter verwendet. Beispielsweise können als Luftverdichter Turboverdichter verwendet werden.

In einer bevorzugten Ausführungsform umfasst die erfindungsgemäße Vorrichtung weitere, miteinander in Wirkverbindung stehende Komponenten. Bevorzugt umfasst die Vorrichtung mindestens einen ersten Wärmetauscher, welcher bevorzugt nach dem Reaktor und bevorzugt vor der Absorptionsvorrichtung angeordnet ist und welcher bevorzugt konfiguriert ist, die NOₓ-Stickoxide zu kühlen, welche über die Zuführungsmittel vom Reaktor zur Absorptionsvorrichtung zugeführt werden.

Bevorzugt umfasst die erfindungsgemäße Vorrichtung einen oder mehrere weitere Wärmetauscher, welche bevorzugt nach der Absorptionsvorrichtung und bevorzugt vor der Restgasreinigungsanlage angeordnet sind und welche bevorzugt konfiguriert sind, die NOₓ-Stickoxide, welche über die Abführungsmittel von der Absorptionsvorrichtung zur Restgasreinigungsanlage und/oder welche über den Bypass vom Reaktor zur Restgasreinigungsanlage überführt werden, zu erhitzen. Bevorzugt werden die NOₓ-Stickoxide in dem Restgaserhitzer um mindestens 20°C erhitzt, bevorzugter um mindestens 40°C, mindestens 60°C, mindestens 80°C, mindestens 100°C, mindestens 120°C, mindestens 140°C, mindestens 160°C, mindestens 180°C, mindestens 200°C, mindestens 220°C, mindestens 240°C, mindestens 260°C, mindestens 280°C, mindestens 300°C, mindestens 320°C, mindestens 340°C, mindestens 360°C, mindestens 380°C, mindestens 400°C, mindestens 420°C, mindestens 440°C oder mindestens 450°C.

Die erfindungsgemäßen Wärmetauscher sind hinsichtlich ihres Aufbaus erfindungsgemäß nicht eingeschränkt. Geeignete Wärmetauscher umfassen Rohrbündelwärmetauscher, Plattenwärmetauscher, Spiralwärmetauscher, U-Rohr-Wärmetauscher, Mantelrohrwärmetauscher, etc.

Bevorzugt umfasst die erfindungsgemäße Vorrichtung eine Mischvorrichtung, welche bevorzugt nach dem Restgaserhitzer und bevorzugt vor der Restgasreinigungsanlage angeordnet ist. Bevorzugt ist die Mischvorrichtung konfiguriert, die nicht absorbierten oder desorbierten NOₓ-Stickoxide, welche der Restgasreinigungsanlage über die Abführungsmittel und/oder den Bypass zugeführt werden, bevorzugt mit Ammoniak zu mischen.

In einer bevorzugten Ausführungsform umfasst die Vorrichtung eine Steuervorrichtung, welche
- zum Öffnen bzw. Verschließen des Bypass'; und/oder
- zum Öffnen bzw. Verschließen der Zuführungsmittel; und/oder
- zum Öffnen bzw. Verschließen der Abführungsmittel.
konfiguriert ist.

Bevorzugt ist die Steuervorrichtung nach dem Reaktor und vor der Absorptionsvorrichtung angeordnet.

Bevorzugt ist die Steuervorrichtung zum Öffnen bzw. Verschließen des Bypass' und zum Öffnen bzw. Verschließen der Zuführungsmittel konfiguriert. Bevorzugt ist die Steuervorrichtung derart konfiguriert, dass beim Öffnen des Bypass' die Zuführungsmittel verschlossen werden. Bevorzugt ist die Steuervorrichtung derart konfiguriert, dass beim Verschließen des Bypass' die Zuführungsmittel geöffnet werden. Bevorzugt ist die Steuervorrichtung derart konfiguriert, dass das Öffnen des Bypass' das Verschließen der Zuführungsmittel bedingt. Bevorzugt ist die Steuervorrichtung derart konfiguriert, dass das Verschließen des Bypass' das Öffnen der Zuführungsmittel bedingt. Bevorzugt erfolgen das Öffnen bzw. Verschließen des Bypass' und das Öffnen bzw. Verschließen der Zuführungsmittel gleichzeitig.

Die Steuervorrichtung umfasst bevorzugt Verschließvorrichtungen zum Öffnen oder Verschließen einer Rohrleitung, welche bevorzugt mindestens ein Ventil umfassen. Die Verschließvorrichtungen der Steuervorrichtung zum Öffnen oder Verschließen der Rohrleitungen können an einer Position oder an verschiedenen Positionen angeordnet sein. Sind die Verschließvorrichtungen an einer Position angebracht, ist die Steuervorrichtung bevorzugt an der Stelle angeordnet, an der der Bypass von den Zuführungsmitteln abzweigt. Sind die Verschließvorrichtungen hingegen an verschiedenen Positionen angeordnet, so ist bevorzugt mindestens eine Verschließvorrichtung am Bypass und mindestens eine Verschließvorrichtung an den Zuführungsmitteln angeordnet.

Bevorzugt ist die Steuervorrichtung derart konfiguriert, dass das Öffnen bzw. Verschließen des Bypass' und das Öffnen bzw. Verschließen der Zuführungsmittel in Abhängigkeit vom Betrieb der Vorrichtung zur Herstellung von Salpetersäure erfolgen. Bevorzugt werden beim Ab- und/oder Anfahren der Vorrichtung zur Herstellung von Salpetersäure die Zuführungsmittel verschlossen und der Bypass geöffnet. Bevorzugt werden im stationären Betrieb der Vorrichtung zur Herstellung von Salpetersäure der Bypass verschlossen und die Zuführungsmittel geöffnet.

Ein Fachmann kann den Zustand einer Vorrichtung zur Herstellung von Salpetersäure während ihres Ab- und/oder Anfahrens vom Zustand der Vorrichtung während ihres stationären Betriebs unterscheiden. Das Abfahren der Vorrichtung schließt sich dem stationären Betrieb an, das Anfahren der Vorrichtung geht dem stationären Betrieb voraus.

In einer anderen bevorzugten Ausführungsform ist die Steuervorrichtung derart konfiguriert, dass das Öffnen bzw. Verschließen des Bypass' und/oder das Öffnen bzw. Verschließen der Zuführungsmittel in Abhängigkeit vom Betrieb der Restgasreinigungsanlage erfolgt. Bevorzugt ist die Steuervorrichtung derart konfiguriert, dass sie beim Betrieb der Restgasreinigungsanlage das Verschließen des Bypass' und das Öffnen der Zuführungsmittel bewirkt. Bevorzugt bewirkt die Steuervorrichtung das Öffnen des Bypass' und das Verschließen der Zuführungsmittel, sobald oder solange die Restgasreinigungsanlage außer Betrieb ist.

In einer bevorzugten Ausführungsform ist die Steuervorrichtung zusätzlich oder alternativ konfiguriert zum Öffnen bzw. Verschließen der Abführungsmittel.

Bevorzugt ist die Steuervorrichtung zum Öffnen bzw. Verschließen des Bypass' und zum Öffnen bzw. Verschließen der Zuführungsmittel und zum Öffnen bzw. Verschließen der Abführungsmittel konfiguriert.

Ist die Steuervorrichtung zusätzlich oder alternativ konfiguriert zum Öffnen bzw. Verschließen der Abführungsmittel, umfasst die Steuervorrichtung bevorzugt eine Verschließvorrichtung, welches nach der Absorptionsvorrichtung, bevorzugt am Auslass der Absorptionsvorrichtung angeordnet ist. Bevorzugt umfasst die Verschließvorrichtung ein Ventil, welches zum Öffnen und Verschließen der Abführungsmittel konfiguriert ist. Bevorzugt ist die Steuervorrichtung zum simultanen Öffnen und Verschließen der Zuführungsmittel und Abführungsmittel konfiguriert, so dass die Steuervorrichtung die Zuführungsmittel und die Abführungsmittel simultan öffnet oder verschließt.

Bevorzugt ist die Steuervorrichtung derart konfiguriert, dass beim Öffnen des Bypass' die Zuführungsmittel und Abführungsmittel verschlossen werden. Bevorzugt ist die Steuervorrichtung derart konfiguriert, dass beim Verschließen des Bypass' die Zuführungsmittel und Abführungsmittel geöffnet werden. Bevorzugt ist die Steuervorrichtung derart konfiguriert, dass das Öffnen des Bypass' das Verschließen der Zuführungsmittel und der Abführungsmittel bedingt. Bevorzugt ist die Steuervorrichtung derart konfiguriert, dass das Verschließen des Bypass' das Öffnen der Zuführungsmittel und der Abführungsmittel bedingt. Bevorzugt erfolgen das Öffnen bzw. Verschließen des Bypass' und das Öffnen bzw. Verschließen der Zuführungsmittel und der Abführungsmittel gleichzeitig.

Bevorzugt ist die Steuervorrichtung derart konfiguriert, dass das Öffnen bzw. Verschließen der Abführungsmittel in Abhängigkeit vom Betrieb der Vorrichtung zur Herstellung von Salpetersäure erfolgt. Bevorzugt werden beim Ab- und/oder Anfahren der Vorrichtung zur Herstellung von Salpetersäure die Abführungsmittel verschlossen. Bevorzugt werden im stationären Betrieb der Vorrichtung zur Herstellung von Salpetersäure die Abführungsmittel geöffnet.

In einer anderen bevorzugten Ausführungsform ist die Steuervorrichtung derart konfiguriert, dass das Öffnen bzw. Verschließen der Abführungsmittel in Abhängigkeit vom Betrieb der Restgasreinigungsanlage erfolgt. Bevorzugt ist die Steuervorrichtung derart konfiguriert, dass sie beim Betrieb der Restgasreinigungsanlage das Öffnen der Abführungsmittel bewirkt. Bevorzugt bewirkt die Steuervorrichtung das Verschließen der Abführungsmittel, sobald oder solange die Restgasreinigungsanlage außer Betrieb ist.

In einer anderen bevorzugten Ausführungsform erfolgt das Öffnen bzw. Verschließen des Bypass' ohne Verschließen der Zu- und Abführungsmittel. Bevorzugt ist der Druckverlust in der Absorptionsvorrichtung ausreichend hoch, so dass der größere Teil des Gasgemischs, welches durch die Vorrichtung zur Herstellung von Salpetersäure strömt, durch den Bypass strömt.

Bevorzugt ist die Steuervorrichtung zum Einblocken der NOₓ-Stickoxide in der Absorptionsvorrichtung derart konfiguriert, dass die NOₓ-Stickoxide nicht aus der Absorptionsvorrichtung entweichen können. Bevorzugt erfolgt das Verschließen der Abführungsmittel und der Zuführungsmittel beim Abfahren der Vorrichtung zur Herstellung von Salpetersäure und sobald die Restgasreinigungsanlage außer Betrieb ist. Bevorzugt erfolgt das Öffnen der Zuführungsmittel und Abführungsmittel beim Anfahren der Vorrichtung zur Herstellung von Salpetersäure, sobald die Restgasreinigungsanlage in Betrieb ist.

Bevorzugt ist die Absorptionsvorrichtung derart konfiguriert, dass mindestens 10 Vol.-% der NOₓ-Stickoxide, bezogen auf das Gesamtvolumen aller Vorrichtungsteile der Vorrichtung zur Herstellung von Salpetersäure, in der Absorptionsvorrichtung eingeblockt werden können, bevorzugter mindestens 20 Vol.-%, mindestens 30 Vol.-%, mindestens 40 Vol.-%, mindestens 50 Vol.-%, mindestens 60 Vol.-%, mindestens 70 Vol.-%, mindestens 80 Vol.-% oder mindestens 90 Vol.-%.

In einer bevorzugten Ausführungsform ist der Bypass zum Überführen des Gasgemischs von dem Reaktor zu der Restgasreinigungsanlage unter Umgehung der Absorptionsvorrichtung und unter Umgehung mindestens eines Wärmetauschers konfiguriert. Bevorzugt ist der Bypass zum Überführen der erzeugten NOₓ-Stickoxide von dem Reaktor zu der Restgasreinigungsanlage unter Umgehung der Absorptionsvorrichtung und unter Umgehung des Wärmetauschers, welcher nach dem Reaktor und vor der Absorptionsvorrichtung angeordnet ist und welcher zum Abkühlen der NOₓ-Stickoxide konfiguriert ist. Bevorzugt erfolgt das Öffnen des Bypass' und das Verschließen der Zuführungsmittel beim Abfahren der Vorrichtung zur Herstellung von Salpetersäure nach dem Einstellen der Verbrennung von NH₃ im Reaktor, damit die hinter dem Reaktor befindlichen NOₓ-Stickoxide der Restgasreinigungsanlage zugeführt werden und dort unter Ausnutzung ihrer Restwärme zersetzt oder reduziert werden können.

Ein weiterer Aspekt der Erfindung umfasst ein Verfahren zur Verminderung der Konzentration von NOₓ-Stickoxiden in Restgas, welches während des Ab- und/oder Anfahrens der erfindungsgemäßen Vorrichtung zur Herstellung von Salpetersäure anfällt, wobei das Verfahren die folgenden Schritte umfasst:
(a) Unterbinden der Zuführung eines Gasgemischs von dem Reaktor zu der Absorptionsvorrichtung; und
(b) Überführen des Gasgemischs von dem Reaktor zu der Restgasreinigungsanlage unter Umgehung der Absorptionsvorrichtung.

Alle bevorzugten Ausführungsformen, welche vorstehend im Zusammenhang mit der erfindungsgemäßen Vorrichtung beschrieben sind, gelten entsprechend analog auch für das erfindungsgemäße Verfahren.

Bevorzugt umfasst das Gasgemisch Luft. In einer anderen bevorzugten Ausführungsform umfasst das Gasgemisch Luft und NOₓ-Stickoxide. Das Gasgemisch kann ggf. weitere, für das erfindungsgemäße Verfahren inerte Bestandteile umfassen.

Bevorzugt erfolgt das Unterbinden der Zuführung des Gasgemischs von dem Reaktor zu der Absorptionsvorrichtung in Abhängigkeit vom Betrieb der Vorrichtung zur Herstellung von Salpetersäure. Bevorzugt wird das Zuführen des Gasgemischs zu der Absorptionsvorrichtung in Schritt (a) ausschließlich beim Ab- und/oder Anfahren, nicht jedoch im stationären Betrieb der Vorrichtung zur Herstellung von Salpetersäure unterbunden.

In Schritt (b) des erfindungsgemäßen Verfahrens wird das Gasgemisch von dem Reaktor zu der Restgasreinigungsanlage unter Umgehung der Absorptionsvorrichtung zu der Restgasreinigungsanlage überführt. Bevorzugt wird das Gasgemisch von dem Reaktor zu der Restgasreinigungsanlage unter Umgehung der Absorptionsvorrichtung überführt, in Abhängigkeit vom Betrieb der Vorrichtung zur Herstellung von Salpetersäure. Bevorzugt wird das Gasgemisch beim Ab- und/oder Anfahren der Vorrichtung zur Herstellung von Salpetersäure in Schritt (b) unter Umgehung der Absorptionsvorrichtung zur Restgasreinigungsanlage überführt. Bevorzugt wird das Gasgemisch vor dem Zünden bzw. nach dem Abschalten der Ammoniakverbrennung beim Ab- und/oder Anfahren der Vorrichtung zur Herstellung von Salpetersäure unter Umgehung der Absorptionsvorrichtung zur Restgasreinigungsanlage überführt.

Bevorzugt erfolgen die erfindungsgemäßen Schritte (a) und (b) simultan.

In einer bevorzugten Ausführungsform erfolgt in Schritt (b) das Überführen des Gasgemischs von dem Reaktor zu der Restgasreinigungsanlage unter Umgehung der Absorptionsvorrichtung und unter Umgehung eines Wärmetauschers. Bevorzugt erfolgt das Überführen des Gasgemischs von dem Reaktor zu der Restgasreinigungsanlage unter Umgehung der Absorptionsvorrichtung und unter Umgehung eines Wärmetauschers vor dem Zünden bzw. nach dem Abschalten der Ammoniakverbrennung beim Ab- und/oder Anfahren der Vorrichtung zur Herstellung von Salpetersäure. Bevorzugt erfolgt in Schritt (b) das Überführen des Gasgemischs von dem Reaktor zu der Restgasreinigungsanlage unter Umgehung der Absorptionsvorrichtung und unter Umgehung des Wärmetauschers, welcher nach dem Reaktor und vor der Absorptionsvorrichtung angeordnet ist und welcher zum Abkühlen des Gasgemischs und Erhitzen des Restgases konfiguriert ist. Bevorzugt werden beim Abfahren der Vorrichtung zur Herstellung von Salpetersäure nach dem Einstellen der Verbrennung von NH₃ im Reaktor der Bypass' geöffnet und die Zuführungsmittel geschlossen, damit die hinter dem Reaktor befindlichen NOₓ-Stickoxide der Restgasreinigungsanlage zugeführt werden und dort unter Ausnutzung ihrer Restwärme zersetzt oder reduziert werden können.

Bevorzugt erfolgt in Schritt (b) das Überführen des Gasgemischs von dem Reaktor zu der Restgasreinigungsanlage unter Umgehung der Absorptionsvorrichtung, unter Umgehung eines Wärmetauschers und unter Umgehung mindestens eines weiteren Vorrichtungsteils der Vorrichtung zur Herstellung von Salpetersäure. Bevorzugt umfasst der weitere Vorrichtungsteil einen Teil der Vorrichtung zur Herstellung von Salpetersäure, in dem sich während des erfindungsgemäßen Verfahrens Salpetersäure ansammeln kann. Bevorzugt umfasst der weitere Vorrichtungsteil, welcher in Schritt (b) umgangen wird, mindestens einen weiteren Wärmetauscher.

In einer bevorzugten Ausführungsform umfasst das Verfahren den zusätzlichen Schritt
(c) Unterbinden der Abführung nicht absorbierter NOₓ-Stickoxide oder desorbierter NOₓ-Stickoxide von der Absorptionsvorrichtung zu der Restgasreinigungsanlage.

Bevorzugt wird die Abführung nicht absorbierter NOₓ-Stickoxide oder desorbierter NOₓ-Stickoxide von der Absorptionsvorrichtung zu der Restgasreinigungsanlage in Abhängigkeit vom Betrieb der Vorrichtung zur Herstellung von Salpetersäure unterbunden. Bevorzugt wird die Abführung in Schritt (c) beim Ab- und/oder Anfahren der Vorrichtung zur Herstellung von Salpetersäure unterbunden. Bevorzugt erfolgen die Schritte (a) und (c) des erfindungsgemäßen Verfahrens simultan. Bevorzugt erfolgen die Schritt (a), (b) und (c) des erfindungsgemäßen Verfahrens simultan.

In einer bevorzugten Ausführungsform erfolgen Schritt (a) und/oder Schritt (b) und/oder Schritt (c), sobald beim Abfahren der Vorrichtung zur Herstellung von Salpetersäure die Restgasreinigungsanlage außer Betrieb genommen wird oder solange beim Anfahren der Vorrichtung zur Herstellung von Salpetersäure die Restgasreinigungsanlage noch nicht in Betrieb ist.

Bevorzugt wird in Schritt (a) die Zuführung des Gasgemischs von dem Reaktor zu der Absorptionsvorrichtung unterbunden, sobald beim Abfahren der Vorrichtung zur Herstellung von Salpetersäure die Restgasreinigungsanlage außer Betrieb genommen wird oder solange beim Anfahren der Vorrichtung zur Herstellung von Salpetersäure die Restgasreinigungsanlage noch nicht in Betrieb ist.

Bevorzugt wird in Schritt (b) das Gasgemisch von dem Reaktor zu der Restgasreinigungsanlage unter Umgehung der Absorptionsvorrichtung überführt, sobald beim Abfahren der Vorrichtung zur Herstellung von Salpetersäure die Restgasreinigungsanlage außer Betrieb genommen wird oder solange beim Anfahren der Vorrichtung zur Herstellung von Salpetersäure die Restgasreinigungsanlage noch nicht in Betrieb ist.

Bevorzugt wird in Schritt (c) die Abführung nicht absorbierter NOₓ-Stickoxide oder desorbierter NOₓ-Stickoxide von der Absorptionsvorrichtung zu der Restgasreinigungsanlage unterbunden, sobald beim Abfahren der Vorrichtung zur Herstellung von Salpetersäure die Restgasreinigungsanlage außer Betrieb genommen wird oder solange beim Anfahren der Vorrichtung zur Herstellung von Salpetersäure die Restgasreinigungsanlage noch nicht in Betrieb ist.

In einer bevorzugten Ausführungsform wird die Umgehung der Absorptionsvorrichtung in Schritt (b) unterbunden, solange beim Abfahren der Vorrichtung zur Herstellung von Salpetersäure die Restgasreinigungsanlage in Betrieb ist oder sobald beim Anfahren der Vorrichtung zur Herstellung von Salpetersäure die Restgasreinigungsanlage in Betrieb genommen wird.

In einer bevorzugten Ausführungsform wird durch das Unterbinden der Zuführung des Gasgemischs von dem Reaktor zur der Absorptionsvorrichtung in Schritt (a) zumindest ein Teil der NOₓ-Stickoxide, welche sich innerhalb der Vorrichtung zur Herstellung von Salpetersäure befinden, in der Absorptionsvorrichtung eingeblockt.

In einer bevorzugten Ausführungsform erfolgt das Einblocken der NOₓ-Stickoxide in der Absorptionsvorrichtung zusätzlich durch das Unterbinden der Abführung nicht absorbierter oder desorbierter NOₓ-Stickoxide von der Absorptionsvorrichtung zu der Restgasreinigungsanlage in Schritt (c).

Bevorzugt werden beim Ab- und/oder Anfahren der Vorrichtung zur Herstellung von Salpetersäure mindestens 10 Vol.-% der in der Vorrichtung zur Herstellung von Salpetersäure befindlichen NOₓ-Stickoxide in der Absorptionsvorrichtung eingeblockt, bevorzugter mindestens 20 Vol.-%, mindestens 30 Vol.-%, mindestens 40 Vol.-%, mindestens 50 Vol.-%, mindestens 60 Vol.-%, mindestens 70 Vol.-%, mindestens 80 Vol.-% oder mindestens 90 Vol.-%, jeweils bezogen auf das Gesamtvolumen aller Vorrichtungsteile der Vorrichtung zur Herstellung von Salpetersäure.

Bevorzugt umfasst die Absorptionsvorrichtung des erfindungsgemäßen Verfahrens Siebböden, welche beim Anfahren der Vorrichtung zur Herstellung von Salpetersäure mit Salpetersäure befüllt werden und wobei das Befüllen mit Salpetersäure erfolgt, sobald die Restgasreinigungsanlage in Betrieb genommen ist.

In einer anderen bevorzugten Ausführungsform umfasst die Absorptionsvorrichtung Glockenböden, welche beim Anfahren der Vorrichtung zur Herstellung von Salpetersäure bereits mit Salpetersäure befüllt sind.

In einer bevorzugten Ausführungsform wird zumindest ein Teil der Salpetersäure, welche in einem Wärmetauscher auskondensiert, in die Absorptionsvorrichtung geleitet. Bevorzugt werden mindestens 10 Vol.-% der Salpetersäure, welche in einem Wärmetauscher auskondensieren, in die Absorptionsvorrichtung geleitet, bevorzugter mindestens 20 Vol.-%, mindestens 30 Vol.-%, mindestens 40 Vol.-%, mindestens 50 Vol.-%, mindestens 60 Vol.-%, mindestens 70 Vol.-%, mindestens 80 Vol.-% oder mindestens 90 Vol.-%, jeweils bezogen auf die Gesamtmenge an in einem Wärmetauscher auskondensierter Salpetersäure. Bevorzugt wird die in einem Wärmetauscher auskondensierte Salpetersäure vollständig in die Absorptionsvorrichtung geleitet.

In einer bevorzugten Ausführungsform wird die erfindungsgemäße Vorrichtung in dem erfindungsgemäßen Verfahren verwendet.

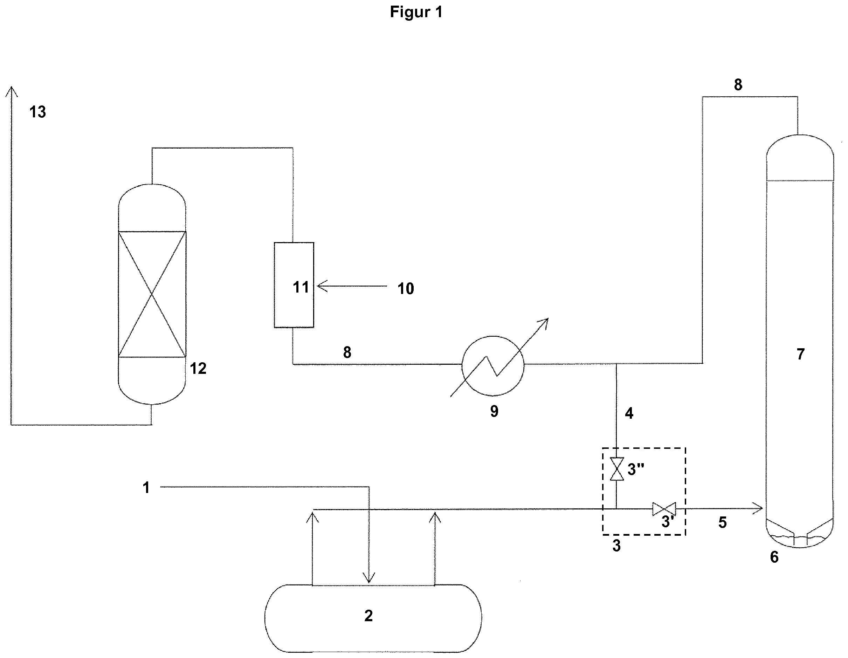

Figur 1 illustriert schematisch und beispielhaft die erfindungsgemäße Vorrichtung zur Herstellung von Salpetersäure aus NOₓ-Stickoxiden, ist jedoch nicht einschränkend auszulegen. Hierbei werden, wie in der Salpetersäureherstellung üblich, bevorzugt in einem Reaktor, der bevorzugt mit Ammoniak und Luft gespeist wird, NOₓ-Stickoxide (1) erzeugt.

Bei der Herstellung von Salpetersäure im stationären Betrieb werden diese NOₓ-Stickoxide (1) bevorzugt über einen oder mehrere Wärmetauscher (2) und bevorzugt über die Zuführungsmittel (5) zur Absorptionsvorrichtung (7) geleitet, wobei zumindest ein Teil der NOₓ-Stickoxide von einer wässrigen Zusammensetzung unter Bildung von Salpetersäure absorbiert wird, welche sich bevorzugt im Sumpf (6) der Absorptionsvorrichtung sammelt. Nicht absorbierte oder desorbierte NOₓ-Stickoxide werden bevorzugt über Abführungsmittel (8) einer Mischvorrichtung (11) zugeführt, in der die NOₓ-Stickoxide bevorzugt mit Ammoniak (10) gemischt werden. Ggf. können sie dazu zunächst einem weiteren Wärmetauscher (9) zugeführt werden. Die bevorzugt mit Ammoniak gemischten NOₓ-Stickoxide werden dann bevorzugt der Restgasreinigungsanlage (12) zugeführt, und das überschüssige Restgas (13) wird bevorzugt an die Umgebung abgegeben.

Beim Ab- und/oder Anfahren der Vorrichtung zur Herstellung von Salpetersäure kann ein Gasgemisch bevorzugt unter Umgehung der Absorptionsvorrichtung (7) über einen Bypass (4) geleitet werden. Bevorzugt kann das Öffnen und/oder das Verschließen des Bypass' und der Zuführungsvorrichtung über eine Steuervorrichtung (3) geregelt werden.

Beim Abfahren der Vorrichtung zur Herstellung von Salpetersäure wird bevorzugt zunächst die Verbrennung von NH₃ im Reaktor eingestellt, so dass keine weiteren NOₓ-Stickoxide (1) mehr gebildet werden. Die noch in der Vorrichtung hinter dem Reaktor befindlichen NOₓ-Stickoxide (1) werden bevorzugt im Wärmetauscher (2) abgekühlt. Über einen Kompressor wird bevorzugt auch nach Einstellen der Verbrennung von NH₃ weiterhin ein Gasgemisch durch die Vorrichtung zur Herstellung von Salpetersäure geleitet. Dadurch sinkt in den Zuführungsmitteln (5) die Konzentration an NOₓ-Stickoxiden, woraufhin bevorzugt über die Verschließvorrichtung der Zuführungsmittel (3') die Zuführungsmittel (5) verschlossen werden. Bevorzugt wird damit der Luftstrom durch die Absorptionsvorrichtung unterbrochen, wodurch zumindest ein Teil der NOₓ-Stickoxide in der Absorptionsvorrichtung eingeblockt wird. Ggf. können auch alternativ die Abführungsmittel (8) verschlossen werden, um ein Ausströmen von NOₓ-Stickoxiden aus der Absorptionsvorrichtung (7) zu unterbinden. Der Bypass (4) wird bevorzugt gleichzeitig über die Verschließvorrichtung des Bypass' (3") geöffnet, so dass das Gasgemisch, welches die Vorrichtung zur Herstellung von Salpetersäure durchströmt, die Absorptionsvorrichtung bevorzugt vollständig umgeht. Bevorzugt wird dadurch eine Desorption von NOₓ-Stickoxiden (1) aus der Salpetersäure, welche sich in der Absorptionsvorrichtung (7) befindet, an das Gasgemisch, welches durch die Vorrichtung zur Herstellung von Salpetersäure strömt, verhindert.

Sobald die Verbrennung von NH₃ im Reaktor eingestellt wird, kann eine weitere Kühlung der noch in der Vorrichtung hinter dem Reaktor befindlichen NOₓ-Stickoxide (1) in dem Wärmetauscher (2) nachteilig sein, da eine Abkühlung der NOₓ-Stickoxide (1) einem möglichst langen Betrieb der Restgasreinigungsanlage (12) entgegenwirkt; die in den NOₓ-Stickoxiden enthaltenen Wärme kann vielmehr die Restgasreinigungsanlage (12) für eine gewisse Dauer auf der erforderlichen Temperatur halten. Bevorzugt werden daher nach dem Einstellen der NH₃-Verbrennung im Reaktor die Zuführungsmittel (5) verschlossen und ein Gasgemisch bevorzugt über den Bypass (4) unter Umgehung sowohl der Absorptionsvorrichtung (7) als auch unter Umgehung des Wärmetauschers (2) der Restgasreinigungsanlage (12) zugeleitet (in Figur 1 nicht gezeigt). Dabei wird die Restwärme der NOₓ-Stickoxide bevorzugt zur katalytischen Zersetzung und Reduktion innerhalb der Restgasreinigungsanlage (12) ausgenutzt.

Beim Anfahren der Vorrichtung zur Herstellung von Salpetersäure hat die Restgasreinigungsanlage (12) die Temperatur, welche zur katalytischen Reduktion bzw. Zersetzung von NOₓ-Stickoxiden (1) erforderlich ist, üblicherweise noch nicht erreicht. In diesem Zustand sind die Zuführungsmittel (5) bevorzugt verschlossen und der Bypass (4) bevorzugt geöffnet. Bevorzugt wird vor dem Zünden der Ammoniakverbrennung beim Anfahren der Vorrichtung zur Herstellung von Salpetersäure die Restgasreinigung erwärmt, bis sie eine Temperatur erreicht hat, die die Zudosierung von Ammoniak zur Restgasreinigung gestattet. Sobald die Restgasreinigungsanlage ihre Betriebstemperatur erreicht hat, werden bevorzugt der Bypass (4) geschlossen und die Zuführungsmittel (5) und Abführungsmittel (8) geöffnet. Die aus der Absorptionsvorrichtung (7) austretenden NOₓ-Stickoxide können bevorzugt in der erwärmten Restgasreinigung reduziert werden. Bevorzugt wird anschließend die Ammoniakverbrennung gestartet. Bevorzugt kann damit verhindert werden, dass NOₓ-Stickoxide (1), welche beim Abfahren der Vorrichtung zur Herstellung von Salpetersäure in der Absorptionsvorrichtung (7) verblieben sind, aus dieser entweichen können, bevor die Restgasreinigungsanlage die nötige Betriebstemperatur erreicht hat. Bevorzugt wird außerdem eine Desorption von NOₓ-Stickoxiden aus Salpetersäure, welche sich in der Absorptionsvorrichtung (7) befindet, unterbunden. Bevorzugt werden der Bypass (4) verschlossen und die Zuführungsmittel (5) geöffnet, sobald die Restgasreinigungsanlage (12) in Betrieb genommen wird. NOₓ-Stickoxide (1), welche in der Absorptionsvorrichtung (7) verblieben sind, können dann bevorzugt durch die Abführungsmittel (8) zur Restgasreinigungsanlage (12) strömen und dort zersetzt bzw. reduziert werden.

### Bezugszeichenliste:

- 1: NOₓ-Stickoxide
- 2: Wärmetauscher
- 3: Steuervorrichtung
- 3': Verschließvorrichtung der Zuführungsmittel
- 3": Verschließvorrichtung des Bypass'
- 4: Bypass
- 5: Zuführungsmittel
- 6: Sumpf
- 7: Absorptionsvorrichtung
- 8: Abführungsmittel
- 9: weiterer Wärmetauscher
- 10: Ammoniak
- 11: Mischvorrichtung
- 12: Restgasreinigungsanlage
- 13: Restgas

## Patentansprüche

1. Eine Vorrichtung zur Herstellung von Salpetersäure aus NOₓ-Stickoxiden (1) umfassend die miteinander in Wirkverbindung stehenden Komponenten:
(i) einen Reaktor konfiguriert zur Erzeugung von NOₓ-Stickoxiden (1);
(ii) eine Absorptionsvorrichtung (7) konfiguriert zur Absorption mindestens eines Teils der erzeugten NOₓ-Stickoxide (1) in einer wässrigen Zusammensetzung;
(iii) eine Restgasreinigungsanlage (12) konfiguriert zum Zersetzen und/oder Reduzieren von nicht absorbierten NOₓ-Stickoxiden (1);
(iv) Zuführungsmittel (5) konfiguriert zum Zuführen der erzeugten NOₓ-Stickoxide (1) von dem Reaktor zu der Absorptionsvorrichtung (7);
(v) Abführungsmittel (8) konfiguriert zum Abführen nicht absorbierter NOₓ-Stickoxide (1) von der Absorptionsvorrichtung (7) zu der Restgasreinigungsanlage (12); und
(vi) einen Bypass (4) konfiguriert zum Überführen eines Gasgemischs während des An- und/oder Abfahrens der Vorrichtung zur Herstellung von Salpetersäure von dem Reaktor zu der Restgasreinigungsanlage (12) unter Umgehung der Absorptionsvorrichtung (7).

2. Die Vorrichtung nach Anspruch 1, umfassend eine Steuervorrichtung (3) konfiguriert
- zum Öffnen bzw. Verschließen des Bypass' (4); und/oder
- zum Öffnen bzw. Verschließen der Zuführungsmittel (5); und/oder
- zum Öffnen bzw. Verschließen der Abführungsmittel (8).

3. Die Vorrichtung nach Anspruch 2, wobei die Steuervorrichtung (3) zusätzlich konfiguriert ist zum Öffnen bzw. Verschließen der Abführungsmittel (8).

4. Die Vorrichtung nach einem der vorstehenden Ansprüche, wobei der Bypass (4) konfiguriert ist zum Überführen des Gasgemischs von dem Reaktor zu der Restgasreinigungsanlage (12) unter Umgehung der Absorptionsvorrichtung (7) und unter Umgehung eines Wärmetauschers (2).

5. Ein Verfahren zur Verminderung der Konzentration von NOₓ-Stickoxiden (1) in Restgas, welches während des Ab- und/oder Anfahrens einer Vorrichtung zur Herstellung von Salpetersäure gemäß einem der Ansprüche 1 bis 4 anfällt, wobei das Verfahren die folgenden Schritte umfasst:
(a) Unterbinden der Zuführung eines Gasgemischs von dem Reaktor zu der Absorptionsvorrichtung (7); und
(b) Überführen des Gasgemischs von dem Reaktor zu der Restgasreinigungsanlage (12) unter Umgehung der Absorptionsvorrichtung (7).

6. Das Verfahren nach Anspruch 5, wobei in Schritt (b) das Überführen des Gasgemischs von dem Reaktor zu der Restgasreinigungsanlage (12) unter Umgehung der Absorptionsvorrichtung (7) und unter Umgehung eines Wärmetauschers (2) erfolgt.

7. Das Verfahren nach einem der Ansprüche 5 oder 6, umfassend den zusätzlichen Schritt
(c) Unterbinden der Abführung nicht absorbierter NOₓ-Stickoxide (1) von der Absorptionsvorrichtung (7) zu der Restgasreinigungsanlage (12).

8. Das Verfahren nach einem der Ansprüche 5 bis 7, wobei Schritt (a) und/oder Schritt (b) und/oder Schritt (c) erfolgen, sobald beim Abfahren der Vorrichtung zur Herstellung von Salpetersäure die Restgasreinigungsanlage (12) außer Betrieb genommen wird, oder solange beim Anfahren der Vorrichtung zur Herstellung von Salpetersäure die Restgasreinigungsanlage (12) noch nicht in Betrieb ist.

9. Das Verfahren nach einem der Ansprüche 5 bis 8, wobei die Umgehung der Absorptionsvorrichtung (7) in Schritt (b) unterbunden wird, solange beim Abfahren der Vorrichtung zur Herstellung von Salpetersäure die Restgasreinigungsanlage (12) in Betrieb ist, oder sobald beim Anfahren der Vorrichtung zur Herstellung von Salpetersäure die Restgasreinigungsanlage (12) in Betrieb genommen wird.

10. Das Verfahren nach einem der Ansprüche 5 bis 9, wobei durch das Unterbinden der Zuführung des Gasgemischs von dem Reaktor zur der Absorptionsvorrichtung (7) in Schritt (a) zumindest ein Teil der NOₓ-Stickoxide (1), welche sich innerhalb der Vorrichtung zur Herstellung von Salpetersäure befinden, in der Absorptionsvorrichtung (7) eingeblockt werden.

11. Das Verfahren nach Anspruch 10, wobei das Einblocken der NOₓ-Stickoxide (1) in der Absorptionsvorrichtung (7) zusätzlich durch das Unterbinden der Abführung nicht absorbierter NOₓ-Stickoxide (1) von der Absorptionsvorrichtung (7) zu der Restgasreinigungsanlage (12) in Schritt (c) erfolgt.

12. Das Verfahren nach einem der Ansprüche 5 bis 11, wobei die Absorptionsvorrichtung (7) Siebböden umfasst, welche beim Anfahren der Vorrichtung zur Herstellung von Salpetersäure mit Salpetersäure befüllt werden und wobei das Befüllen mit Salpetersäure erfolgt, sobald die Restgasreinigungsanlage (12) in Betrieb genommen ist.

13. Das Verfahren nach einem der Ansprüche 5 bis 12, wobei die Absorptionsvorrichtung (7) Glockenböden umfasst, welche beim Anfahren der Vorrichtung zur Herstellung von Salpetersäure bereits mit Salpetersäure befüllt sind.

14. Das Verfahren nach einem der Ansprüche 5 bis 13, wobei zumindest ein Teil der Salpetersäure, welche in einem Wärmetauscher (2) auskondensiert, in die Absorptionsvorrichtung geleitet wird.

15. Verwendung der Vorrichtung gemäß einem der Ansprüche 1 bis 4 in dem Verfahren gemäß einem der Ansprüche 5 bis 10.

## Claims

1. An apparatus for preparing nitric acid from NOₓ nitrogen oxides (1) comprising the actively interconnected components:
(i) a reactor configured for producing NOₓ nitrogen oxides (1);
(ii) an absorption apparatus (7) configured for absorption of at least part of the NOₓ nitrogen oxides (1) produced in an aqueous composition;
(iii) a residual gas purification plant (12) configured for decomposing and/or reducing unabsorbed NOₓ nitrogen oxides (1);
(iv) feed means (5) configured for feeding the NOₓ nitrogen oxides (1) produced from the reactor to the absorption apparatus (7);
(v) discharge means (8) configured for discharging unabsorbed NOₓ nitrogen oxides (1) from the absorption apparatus (7) to the residual gas purification plant (12); and
(vi) a bypass (4) configured for transferring a gas mixture from the reactor to the residual gas purification plant (12) with bypassing of the absorption apparatus (7) during start-up and/or shutdown of the apparatus for preparing nitric acid.

2. The apparatus according to Claim 1 comprising a control device (3) configured
- for opening and closing the bypass (4); and/or
- for opening and closing the feed means (5); and/or
- for opening and closing the discharge means (8).

3. The apparatus according to Claim 2, wherein the control device (3) is additionally configured for opening and closing the discharge means (8).

4. The apparatus according to any of the preceding claims, wherein the bypass (4) is configured for transferring the gas mixture from the reactor to the residual gas purification plant (12) with bypassing of the absorption apparatus (7) and bypassing a heat exchanger (2).

5. A process for reducing the concentration of NOₓ nitrogen oxides (1) in residual gas which is obtained during shutdown and/or start-up of an apparatus for preparing nitric acid according to any of Claims 1 to 4, wherein the process comprises the following steps:
(a) stopping of the feeding of a gas mixture from the reactor to the absorption apparatus (7); and
(b) transferring of the gas mixture from the reactor to the residual gas purification plant (12) with bypassing of the absorption apparatus (7) .

6. The process according to Claim 5, wherein the transferring of the gas mixture from the reactor to the residual gas purification plant (12) in step (b) occurs with bypassing of the absorption apparatus (7) and with bypassing of a heat exchanger (2).

7. The process according to either Claim 5 or 6, comprising the additional step
(c) stopping of the discharge of unabsorbed NOₓ nitrogen oxides (1) from the absorption apparatus (7) to the residual gas purification plant (12).

8. The process according to any of Claims 5 to 7, wherein step (a) and/or step (b) and/or step (c) are carried out as soon as the residual gas purification plant (12) is taken out of operation during shutdown of the apparatus for preparing nitric acid or as long as the residual gas purification plant (12) is not yet in operation during start-up of the apparatus for preparing nitric acid.

9. The process according to any of Claims 5 to 8, wherein the bypassing of the absorption apparatus (7) in step (b) is stopped as long as the residual gas purification plant (12) is in operation during shutdown of the apparatus for preparing nitric acid or as soon as the residual gas purification plant (12) is taken into operation during start-up of the apparatus for preparing nitric acid.

10. The process according to any of Claims 5 to 9, wherein at least part of the NOₓ nitrogen oxides (1) which are present within the apparatus for preparing nitric acid are blocked-in in the absorption apparatus (7) by stopping of the feeding of the gas mixture from the reactor to the absorption apparatus (7) in step (a).

11. The process according to Claim 10, wherein the blocking-in of the NOₓ nitrogen oxides (1) in the absorption apparatus (7) is additionally effected by the stopping of the discharge of unabsorbed NOₓ nitrogen oxides (1) from the absorption apparatus (7) to the residual gas purification plant (12) in step (c).

12. The process according to any of Claims 5 to 11, wherein the absorption apparatus (7) comprises sieve trays which are filled with nitric acid when starting up the apparatus for preparing nitric acid and wherein the filling with nitric acid is carried out as soon as the residual gas purification plant (12) has been taken into operation.

13. The process according to any of Claims 5 to 12, wherein the absorption apparatus (7) comprises bubble cap trays which have already been filled with nitric acid when the apparatus for preparing nitric acid is started up.

14. The process according to any of Claims 5 to 13, wherein at least part of the nitric acid which condenses out in a heat exchanger (2) is conveyed into the absorption apparatus.

15. Use of the apparatus according to any of Claims 1 to 4 in the process according to any of Claims 5 to 10.

## Revendications

1. Dispositif pour la fabrication d'acide nitrique à partir d'oxydes d'azote NOₓ (1), comprenant les composants interconnectés suivants :
(i) un réacteur configuré pour former des oxydes d'azote NOₓ (1) ;
(ii) un dispositif d'absorption (7) configuré pour l'absorption d'au moins une partie des oxydes d'azote NOₓ (1) formés dans une composition aqueuse ;
(iii) une unité de purification du gaz résiduel (12) configurée pour la décomposition et/ou la réduction des oxydes d'azote NOₓ (1) non absorbés ;
(iv) un moyen d'alimentation (5) configuré pour l'introduction des oxydes d'azote NOₓ (1) formés depuis le réacteur dans le dispositif d'absorption (7) ;
(v) un moyen de déchargement (8) configuré pour le déchargement des oxydes d'azote NOₓ (1) non absorbés depuis le dispositif d'absorption (7) dans l'unité de purification du gaz résiduel (12) ; et
(vi) une conduite de dérivation (4) configurée pour le transfert d'un mélange gazeux pendant le démarrage et/ou l'arrêt du dispositif pour la fabrication d'acide nitrique depuis le réacteur dans l'unité de purification de gaz résiduel (12) en contournant le dispositif d'absorption (7).

2. Dispositif selon la revendication 1, comprenant un dispositif de commande (3), configuré :
- pour l'ouverture et la fermeture de la conduite de dérivation (4) ; et/ou
- pour l'ouverture et la fermeture du moyen d'alimentation (5) ; et/ou
- pour l'ouverture et la fermeture du moyen de déchargement (8).

3. Dispositif selon la revendication 2, dans lequel le dispositif de commande (3) est en outre configuré pour l'ouverture et la fermeture du moyen de déchargement (8).

4. Dispositif selon l'une quelconque des revendications précédentes, dans lequel la conduite de dérivation (4) est configurée pour le transfert du mélange gazeux depuis le réacteur dans l'unité de purification de gaz résiduel (12) en contournant le dispositif d'absorption (7) et en contournant un échangeur de chaleur (2).

5. Procédé de réduction de la concentration en oxydes d'azote NOₓ (1) dans un gaz résiduel qui se forme pendant l'arrêt et/ou le démarrage d'un dispositif pour la fabrication d'acide nitrique selon l'une quelconque des revendications 1 à 4, le procédé comprenant les étapes suivantes :
(a) l'arrêt de l'introduction d'un mélange gazeux depuis le réacteur dans le dispositif d'absorption (7) ; et
(b) le transfert du mélange gazeux depuis le réacteur dans l'unité de purification de gaz résiduel (12) en contournant le dispositif d'absorption (7).

6. Procédé selon la revendication 5, dans lequel, à l'étape (b), le transfert du mélange gazeux depuis le réacteur dans l'unité de purification de gaz résiduel (12) a lieu en contournant le dispositif d'absorption (7) et en contournant un échangeur de chaleur (2).

7. Procédé selon l'une quelconque des revendications 5 ou 6, comprenant l'étape supplémentaire suivante :
(c) l'arrêt du déchargement des oxydes d'azote NOₓ non absorbés (1) depuis le dispositif d'absorption (7) dans l'unité de purification de gaz résiduel (12).

8. Procédé selon l'une quelconque des revendications 5 à 7, dans lequel l'étape (a) et/ou l'étape (b) et/ou l'étape (c) ont lieu dès que l'unité de purification de gaz résiduel (12) est mise hors service lors de l'arrêt du dispositif pour la fabrication d'acide nitrique, ou tant que l'unité de purification de gaz résiduel (12) n'est pas encore en service lors du démarrage du dispositif pour la fabrication d'acide nitrique.

9. Procédé selon l'une quelconque des revendications 5 à 8, dans lequel le contournement du dispositif d'absorption (7) à l'étape (b) est arrêté tant que l'unité de purification de gaz résiduel (12) est en service lors de l'arrêt du dispositif pour la fabrication d'acide nitrique ou dès que l'unité de purification de gaz résiduel (12) est en service lors du démarrage du dispositif pour la fabrication d'acide nitrique.

10. Procédé selon l'une quelconque des revendications 5 à 9, dans lequel l'arrêt de l'introduction du mélange gazeux depuis le réacteur dans le dispositif d'absorption (7) à l'étape (a) entraîne le blocage d'au moins une partie des oxydes d'azote NOₓ (1), qui se trouvent dans le dispositif pour la fabrication d'acide nitrique, dans le dispositif d'absorption (7).

11. Procédé selon la revendication 10, dans lequel le blocage des oxydes d'azote NOₓ (1) dans le dispositif d'absorption (7) a en outre lieu en raison de l'arrêt du déchargement des oxydes d'azote NOₓ non absorbés (1) depuis le dispositif d'absorption (7) dans l'unité de purification du gaz résiduel (12) à l'étape (c).

12. Procédé selon l'une quelconque des revendications 5 à 11, dans lequel le dispositif d'absorption (7) comprend des plateaux perforés, qui sont remplis avec de l'acide nitrique lors du démarrage du dispositif de fabrication d'acide nitrique, et dans lequel le remplissage avec l'acide nitrique a lieu dès que l'unité de purification de gaz résiduel (12) est mise en service.

13. Procédé selon l'une quelconque des revendications 5 à 12, dans lequel le dispositif d'absorption (7) comprend des plateaux à calottes, qui sont déjà remplis avec de l'acide nitrique lors du démarrage du dispositif pour la fabrication d'acide nitrique.

14. Procédé selon l'une quelconque des revendications 5 à 13, dans lequel au moins une partie de l'acide nitrique qui est condensé dans un échangeur de chaleur (2) est conduit dans le dispositif d'absorption.

15. Utilisation du dispositif selon l'une quelconque des revendications 1 à 4 dans le procédé selon l'une quelconque des revendications 5 à 10.
